# EUROPÄISCHE PATENTSCHRIFT

(11) **EP 2 326 534 B1**
(45) Veröffentlichungstag und Bekanntmachung des Hinweises auf die Patenterteilung: **13.06.2012**
(21) Anmeldenummer: 09778426.8
(22) Anmeldetag: 09.09.2009
(51) Int. Cl.: B60R 21/203

(54) **HUPENMODUL FÜR EIN FAHRZEUGLENKRAD UND FAHRZEUGLENKRAD**
HORN MODULE FOR A VEHICLE STEERING WHEEL AND VEHICLE STEERING WHEEL
MODULE AVERTISSEUR SONORE POUR LE VOLANT DE DIRECTION D'UN VÉHICULE ET VOLANT DE DIRECTION D'UN VÉHICULE

(30) Priorität: 09.09.2008 DE 102008046382
(43) Veröffentlichungstag der Anmeldung: 01.06.2011
(73) Patentinhaber: TRW Automotive Safety Systems GmbH, 63743 Aschaffenburg (DE)
(72) Erfinder: RADDE, Werner, 64832 Badenhausen (DE); FRISCH, Ralph, 63776 Mömbris (DE)
(74) Vertreter: Mehnert, Bernhard
(86) Internationale Anmeldenummer: PCT/EP2009/006539
(87) Internationale Veröffentlichungsnummer: WO 2010/028815

(56) Entgegenhaltungen:
- EP-A1- 0 568 764
- WO-A1-00/50264
- US-A- 5 303 952
- US-A- 5 423 569

## Beschreibung

Die Erfindung betrifft ein Hupenmodul für ein Fahrzeuglenkrad gemäß Oberbegriff von Patentanspruch 1, wie es z. B. in der WO 00/50264 gezeigt ist.

Seit der serienmäßigen Einführung von Gassackmodulen im Lenkrad ist es ein Ziel, die Anordnung und Integration der Hupenschaltung zu verbessern. Ein weit verbreitetes Konzept sieht vor, dass Gassackmodul schwimmend, als sogenanntes Floating Horn, einzubauen, wobei zur Betätigung der Hupe das gesamte Gassackmodul in die Lenkradnabe hineingedrückt wird. Hierdurch wird generell ein Hupenschaltkreis geschlossen, wobei sich ein Teil eines Schalters am Gassackmodul und der andere Teil an der Lenkradnabe befindet. Bei geschlossenem Hupenschaltkreis fließt ein Strom, und eine Auswerteschaltung bewirkt die Auslösung eines Hupsignals.

Der hierbei vom Gassackmodul zurückgelegte Weg ist relativ lang. Dies hat zur Folge, dass zwischen dem Gassackmodul und der Wandung seiner Aufnahme im Lenkrad ein relativ breiter Spalt bestehen muss, um eine sichere Bewegung des Gassackmoduls zu gewährleisten. Dieser Spalt erweist sich jedoch als störend und sollte möglichst klein gehalten werden.

Es ist Aufgabe der Erfindung, ein Hupenmodul zu schaffen, mit dem die Bewegung des Gassackmoduls im Lenkrad zur Betätigung der Hupe minimiert werden kann.

Erfindungsgemäß wird diese Aufgabe für ein Hupenmodul für ein Fahrzeuglenkrad, bei dem wenigstens ein elektronischer Hupensensor vorgesehen, der ein bei Aufbringung einer Hupenbetätigungskraft auslenkbares Auslösebauteil aufweist, dadurch gelöst, dass am Auslösebauteil wenigstens ein Dehnungsmessstreifen angeordnet ist, über dessen Auslenkung ein Signal erzeugbar ist. Anstelle wie herkömmlich einen elektrischen Schaltkreis zu schließen, indem zwei elektrische Kontakte in Berührung gebracht werden, wird das Signal durch die Auslenkung des Auslösebauteils und durch Änderung des Widerstands des Dehnungsmessstreifens bzw. einer der Änderung einer elektronischen Größe des Dehnungsmessstreifens zugeordneten Spannung erzeugt. Ein derartiger bekannter Dehnungsmessstreifen muss nur um einen sehr geringen Betrag ausgelenkt werden, um ein sicher messbares Signal zu liefern. Auf diese Weise können die Wege, die zur Betätigung der Hupe notwendig sind, deutlich verringert werden. Da sich das Gassackmodul im Lenkrad nicht mehr über so weite Strecken bewegen muss, können auch die Spalte zwischen dem Gassackmodul und den Wänden seiner Aufnahme verkleinert werden.

Bei einer Auslenkung des Auslösebauteils wird der Dehnungsmessstreifen in seiner Form und/oder Länge verändert, wodurch ein durch den Dehnungsmessstreifen bestimmter elektronischer Wert, bevorzugt sein elektrischer Widerstand oder eine diesem zugeordnete Spannung, verändert wird.

Diese Veränderung kann z.B. von einer Auswerteelektronik detektiert werden, die vorzugsweise eine Signalverarbeitung vornimmt und insbesondere aus dem durch den Dehnungsmessstreifen bestimmten elektronischen Wert ein Signal erzeugt, das letztendlich zum Ertönen eines Huptons führt.

Die Auswerteelektronik ist vorzugsweise so ausgebildet, dass sie zwischen echten Hupensignalen und kurzen Störimpulsen unterscheidet, die z.B. bei Befahren einer schlechten Wegstrecke durch kurzzeitiges Schwingen des Gassackmoduls aufgrund seiner Trägheit z.B. beim Überfahren eines Schlaglochs erzeugt werden. Anhand ihrer kürzeren Zeitdauer lassen sich derartige Störimpulse leicht von echten Hupensignalen unterscheiden.

Um einen definierten Ausgangswert zu bestimmen, ist vorzugsweise vorgesehen, dass die Auswerteelektronik so programmiert ist, dass sie zu einem vorbestimmten Startzeitpunkt den durch den Dehnungsmessstreifen bestimmten elektronischen Wert als Nullwert festlegt. Dies kann beispielsweise jeweils beim Start des Fahrzeugs geschehen.

Das Auslösebauteil weist bevorzugt einen bei Hupenbetätigung auslenkbaren balkenartigen Abschnitt auf. Dieser kann beispielsweise ein frei auskragendes Ende aufweisen, so dass er etwa die Form einer Zunge annimmt. Möglich wäre es auch, den balkenartigen Abschnitt in Form einer Brücke auszubilden.

Zumindest ein Dehnungsmessstreifen sitzt vorteilhaft am Übergang des balkenartigen Abschnitts zum Rest des Auslösebauteils, da an dieser Stelle durch die Änderung der Krümmung bei Auslenkung des balkenartigen Abschnitts einen besonders große Änderung des durch den Dehnungsmessstreifen bestimmten elektronischen Werts zu erwarten ist. Da die Dehnungsmessstreifen sehr empfindlich sind, reicht bei einer Länge des balkenartigen Abschnitts von etwa 1,5 cm eine Auslenkung um maximal ca. 0,2 mm, um ein sicher detektierbares Signal zu erzeugen.

Vorzugsweise bildet das Auslösebauteil einen Abschnitt einer Platte, insbesondere einer Leiterplatte.

Der auslenkbare balkenartige Abschnitt ist vorteilhaft einstückig mit der Platte verbunden und beispielsweise aus der Platte ausgeschnitten oder ausgefräst.

Diese Gestaltung hat den Vorteil, dass eine einzige Leiterplatte für das gesamte Hupenmodul verwendet werden kann, auf der auch weitere Hupensensoren sowie gegebenenfalls die Auswerteelektronik angeordnet sein können.

Zur besseren Erfassung der Bewegung des Gassackmoduls können mehrere Hupensensoren vorgesehen sein. Beispielsweise können vier oder fünf Hupensensoren verwendet werden, die bevorzugt alle in einer gemeinsamen Elementebene und vorteilhaft alle auf der gleichen Platte angeordnet sind.

Auch die Auswerteelektronik kann auf derselben Platte angeordnet sein wie der bzw. die Hupensensoren. Vorteilhaft übernimmt eine einzige Auswerteelektronik die Auswertung der Daten sämtlicher Dehnungsmessstreifen des gesamten Hupenmoduls.

Eine elektrische Kontaktierung des Gassackmoduls entfällt, da kein elektrischer Kontakt zwischen dem Gassackmodul und dem Hupenmodul geschlossen werden muss, sondern das Hupensignal allein durch die Auslenkung des Dehnungsmessstreifens und der Änderung des durch den Dehnungsmessstreifen bestimmten elektronischen Werts generiert wird.

In der Nähe des Dehnungsmessstreifens sind bevorzugt Befestigungsstellen zur Befestigung des Hupensensors vorgesehen, sodass eine kontrollierte Auslenkung des Auslösebauteils um einen vorgegebenen Betrag sichergestellt ist. Die Befestigung erfolgt beispielsweise an der Lenkradnabe oder einem mit der Lenkradnabe verbundenen weiteren Bauteil. Vorzugsweise erfolgt die Befestigung beidseitig des balkenartigen Abschnitts.

Über die Befestigungsstellen kann auch das gesamte Hupenmodul an der Lenkradnabe befestigt werden.

Im Rahmen der Erfindung einsetzbare Dehnungsmessstreifen sind beispielsweise aus der Wägetechnik bekannt.

Um auf einfache Weise ein Hupensignal von einer Veränderung des über den Dehnungsmessstreifen bestimmten elektronischen Werts zu unterscheiden, die beispielsweise auf thermischer Ausdehnung basiert, ist es möglich, auch auf der gegenüberliegenden Seite des Hupensensors wenigstens einen Dehnungsmessstreifen vorzusehen. Aus der Korrelation der Veränderungen der elektronischen Werte, die von den Dehnungsmessstreifen auf den unterschiedlichen Seiten geliefert werden, lässt sich auf einfache Weise in der Auswerteelektronik entscheiden, ob es sich um ein echtes Hupensignal oder ein Störsignal handelt.

In einer bevorzugten Ausführungsform der Erfindung sind mehrere parallel verlaufende Dehnungsmessstreifen vorgesehen, was die die Signalqualität verbessert.

Der Dehnungsmessstreifen kann beispielsweise durch Aufdrucken eines Widerstandslacks auf den Hupensensor gebildet sein. Hierzu kann z.B. eine Struktur aus Widerstandslack mittels eines geeigneten bekannten Druckers, etwa auf Basis eines Tintenstrahldruckers, auf den Hupensensor aufgedruckt werden: Es ist jedoch auch möglich, andere für Dehnungsmessstreifen bekannte Materialien zu verwenden.

Bevorzugt ist das Auslösebauteil vorgespannt eingebaut, was auf einfache Weise einen Toleranzausgleich für das Modul ermöglicht. Hierzu können zusätzche Federn notwendig sein.

Die Erfindung wird vorzugsweise in einem Fahrzeuglenkrad umgesetzt, bei dem im Nabenbereich ein Gassackmodul beweglich angeordnet ist, wobei am Gassackmodul wenigstens ein Kontaktpunkt vorgesehen ist, der in Kontakt mit einem Auslösebauteil kommt, um das Auslösebauteil auszulenken. Hierbei handelt es sich, wie bereits erwähnt, um einen rein mechanischen Kontakt, nicht um das Schließen eines elektrischen Schaltkreises. Durch das Auslenken des Gassackmoduls wird eine Auslenkung des Auslösebauteils bewirkt, wobei durch die Auslenkung des Auslösebauteils der Dehnungsmessstreifen geometrisch verändert wird, wodurch sich ein durch den Dehnungsmessstreifen bestimmter elektronischer Wert ändert, was wiederum von einer Auswerteelektronik detektiert und als Hupensignal interpretiert wird. Dieses Signal wird entsprechend weitergegeben und ein Hüpton erzeugt.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische Ansicht eines Nabenbereichs eines erfindungsgemäßen Fahrzeuglenkrads mit einem eingebauten Hupenmodul gemäß der Erfindung;
- Figur 2 einen Schnitt entlang der Linie II-II in Figur 1;
- Figur 3 eine schematische Draufsicht auf einen Hupensensor eines erfindungsgemäßen Hupenmoduls;
- Figur 4 einen Schnitt durch den Hupensensor entlang der Linie IV-IV in Figur 3;
- Figur 5 eine perspektivische Ansicht des Hupensensors in Figur 3;
- Figur 6 eine schematische Draufsicht auf ein erfindungsgemäßes Hupenmodul mit fünf Hupensensoren; und
- Figur 7 eine schematische perspektivische Ansicht des Hupenmoduls in Figur 6.

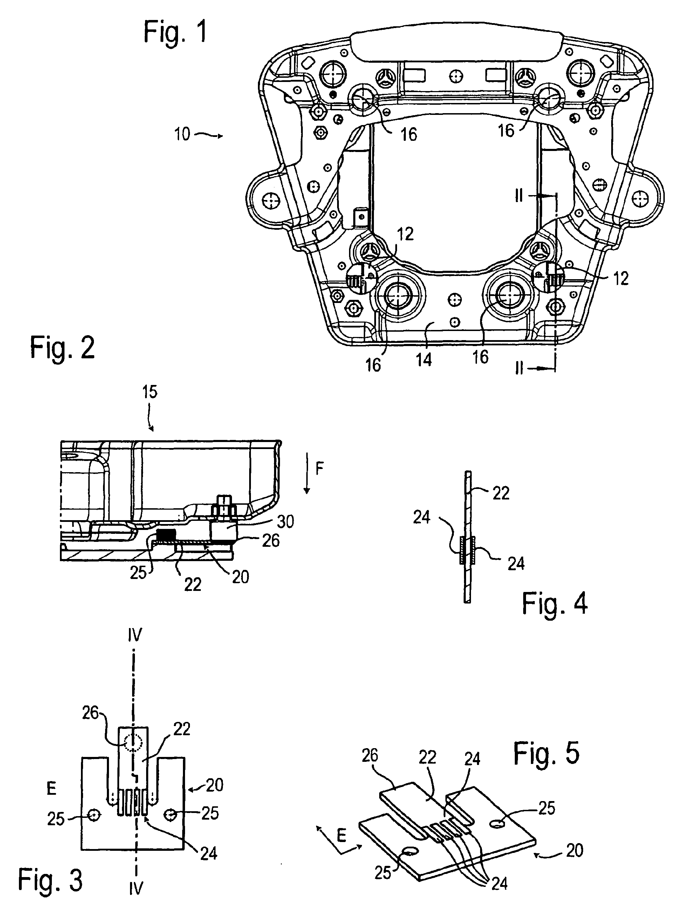

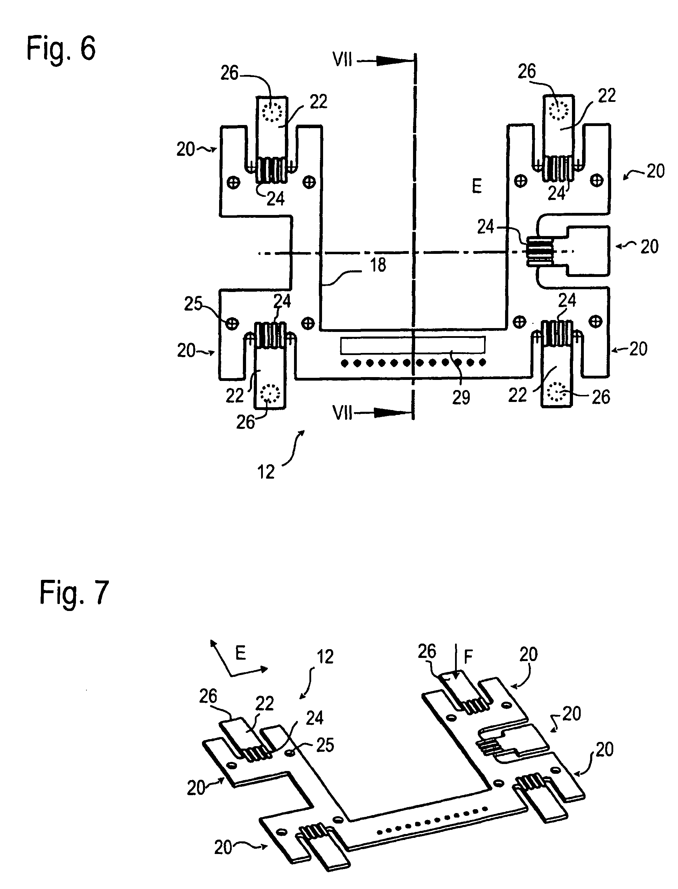

Figur 1 zeigt den Nabenbereich 10 eines nicht weiter dargestellten Fahrzeuglenkrads mit einem Hupenmodul 12 (siehe Figuren 6 und 8), das hier nur abschnittsweise sichtbar ist. Das Hupenmodul 12 liegt unterhalb einer Halterung 14 für ein Gassackmodul 15 (schematisch gezeigt in Figur 2). Sowohl das Hupenmodul 12 als auch die Halterung 14 sind fest mit dem Nabenbereich 10 verbunden. In der Halterung 14 sind mehrere Öffnungen 16 ausgebildet, durch die Rastbolzen des Gassackmoduls 15 hindurchgesteckt werden, die an einer Rastfeder lenkradfest verrasten (nicht dargestellt). Das Gassackmodul 15 ist um ein vorgegebenes Maß in Richtung senkrecht zur Bildebene der Figur 1 beweglich.

Das Hupenmodul 12 weist eine großflächige Platte 18 auf, die hier aus einer einzigen Leiterplatte gebildet ist (siehe Figuren 6 und 8). Einzelne Abschnitte dieser Platte 18 bilden Hupensensoren 20, die für die eigentliche Erzeugung eines Hupensignals verantwortlich sind.

Jeder der Hupensensoren 20 ist in einer Elementebene E ausgerichtet und besitzt ein auslenkbares Auslösebauteil 22 in Form eines balkenartigen Abschnitts. Der balkenartige Abschnitt ist hier in Form einer Zunge ausgebildet, die an einem Ende einstückig mit dem Rest der Platte 18 verbunden ist. In diesem Beispiel ist das Auslösebauteil 22 aus der Leiterplatte herausgefräst. Der balkenartige Abschnitt ist im gezeigten Beispiel etwa 1,5 cm lang.

In Übergangsbereich vom Auslösebauteil 22 zum Rest der Platte 18 ist ein Dehnungsmessstreifen 24 aufgebracht, dessen elektrischer Widerstand sich verändert, wenn sich seine Geometrie ändert. Dieser Widerstand oder gegebenenfalls auch ein anderer, durch den Dehnungsmessstreifen bestimmter elektronischer Wert ändert sich, wenn das Auslösebauteil 22 ausgelenkt wird. Hierüber wird ein elektrisches Signal erzeugt, das zur Generierung eines Hupensignals verwendet wird, wie später näher erläutert wird.

Am freien Ende des Auslösebauteils 22 ist ein Auslenkabschnitt 26 vorgesehen, an dem eine Kraft F zur Auslenkung des Auslösebauteils 22 aufgebracht wird, wenn ein Hupensignal erzeugt werden soll.

Der Dehnungsmessstreifen 24 ist hier direkt im Übergang des Auslösebauteils 22 zur restlichen Platte 18 angeordnet. In diesem Beispiel sind vier parallel zueinander verlaufende Dehnungsmessstreifen 24 vorgesehen. Aus Gründen der Übersichtlichkeit sind diese nur in Figur 5 sämtlich mit Bezugszeichen versehen. Jeder Dehnungsmessstreifen 24 besteht aus einer dünnen Schicht eines bekannten Widerstandslacks, der auf die Platte 18 aufgedruckt ist.

Natürlich kann auch eine andere geeignete Geometrie für den Dehnungsmessstreifen 24, insbesondere in Form einer einzigen, verbundenen Linie mit parallel verlaufenden Abschnitten, gewählt werden. Außerdem kann jede andere Art von bekannten Dehnungsmessstreifen, wie sie beispielsweise in Labor- oder Personenwaagen Einsatz finden, aus jedem dafür geeigneten Material eingesetzt werden.

Die Figuren 6 und 7 zeigen das gesamte Hupenmodul 12. Die Platte 18 ist in etwa U-förmig ausgebildet. An jedem der vier Eckpunkte des U ist jeweils ein Hupensensor 20 angeordnet, wobei die Auslösebauteile 22 jeweils zweier benachbarter Hupensensoren 20 voneinander wegweisen. Ein fünfter, optionaler, Hupensensor 20 ist zwischen zwei der Hupensensoren 20 an den Eckpunkten vorgesehen, in Figur 6 auf dem rechten Schenkel des U, wobei dessen Auslösebauteil 22 nach außen weist. Alle fünf Hupensensoren 20 sind in derselben Elementebene E ausgerichtet.

An diesem fünften Hupensensor 20 ist an einer breiten schaufelförmigen Fläche ein Gewicht befestigt. Dieser Sensor generiert ein Signal, wenn das Fahrzeug eine Schlechtwegstrecke befährt, mittels dem die anderen Hupensensoren 20 ausgeschaltet werden können, um Fehlauslösungen von Hupsignalen zu verhindern.

Das Hupenmodul 12 weist außerdem eine (nur in Figur 6 schematisch angedeutete) Auswerteelektronik 29 auf, die ebenfalls auf der Platte 18 angeordnet ist und die die durch die Dehnungsmessstreifen 24 bestimmten elektronischen Werte zu einem Hupensignal verarbeitet.

Die Signalverarbeitung umfasst insbesondere für jeden Hupensensor 20 eine Wheatstonesche Brücke, die den Widerstandswert des Dehnungsmessstreifens 24 in eine dazu korrelierende Spannung umsetzt (nicht dargestellt).

Das Hupenmodul 12 ist so in den Nabenbereichs 10 des Lenkrads eingebaut, dass bei eingesetztem Gassackmodul 15 Kontaktpunkte 30, die an entsprechenden Stellen an der Unterseite des Gassackmoduls 15 angebracht sind, in Kontakt mit den Auslenkabschnitten 26 der Auslösebauteile 22 sind. Im gezeigten Fall sind die Kontaktpunkte 30 einfach durch in den Boden des Gassackmoduls 15 eingeschraubte Schrauben gebildet. An dieser Stelle wird kein elektrischer Kontakt hergestellt, sondern lediglich ein mechanischer. Es ist nicht erforderlich, dass die Platte 18 im Bereich der Auslenkabschnitte 26 elektrisch leitend ist. Die gesamte Signalerzeugung findet in den Dehnungsmessstreifen 24 statt und beruht nicht auf einem zwischen dem Gassackmodul 15 und dem Auslösebauteil 22 zustande kommenden elektrischen Kontakt.

Im unbelasteten, neutralen Ausgangszustand drückt das Gassackmodul 15 bereits ein wenig auf die Auslösebauteile 22, sodass diese um ein vorbestimmtes Maß vorgespannt sind. So lassen sich Abstandstoleranzen bei der Montage von Gassackmodul 15 und Hupenmodul 12 ausgleichen.

Die Auswerteelektronik 29 des Hupenmoduls 12 erfasst den Widerstandswert, den der Dehnungsmessstreifen 24 in diesem Grundzustand aufweist, bzw. den zugeordneten Spannungswert. Dieser wird von der Auswerteelektronik 29 zu einem Nullwert verarbeitet. Dies geschieht beispielsweise zu einem vorbestimmten Startzeitpunkt, beispielsweise jeweils beim Starten des Fahrzeugs. Ein derartiger Nullwert wird für jeden einzelnen Hupensensor 20 ermittelt. Von diesem Nullwert ausgehend werden Änderungen des durch die Dehnungsmessstreifen 24 bestimmten elektronischen Wertes von der Auswerteelektronik 29 aufgenommen, verarbeitet und interpretiert.

Zur Betätigung der Hupe, also zur Erzeugung eines Hupsignals, drückt der Fahrer auf das Gassackmodul 15 und bringt auf dieses eine in den Nabenbereich 10 hinein gerichtete Kraft auf, die senkrecht zur Elementebene E des Hupenmoduls 12 wirkt. Damit wirkt eine Kraft F von den Kontaktpunkten 30 des Gassackmoduls 15 auf die Auslenkabschnitte 26 der Auslösebauteile 22 der Hupensensoren 20 des Hupenmoduls 12. Hierdurch werden die Auslösebauteile 22 elastisch nach unten ausgelenkt (in Figur 2), wodurch sich der durch die Dehnungsmessstreifen 24 bestimmte elektronische Wert verändert. Um ein messbares Signal zu erzeugen, ist bei der hier dargestellten Geometrie lediglich eine Auslenkung von maximal ca. 0,2 mm erforderlich, also nur eine ganz minimale Verlagerung des Gassackmoduls 15 in Richtung zum Nabenbereich 10.

Lässt der Fahrer das Gassackmodul 15 wieder los, sorgt ein (nicht dargestelltes) Rückstellelement dafür, dass das Gassackmodul 15 wieder in seine Ausgangsstellung zurückbewegt wird.

Das Hupenmodul 12 ist über Befestigungsstellen 25 am Nabenbereich 10 befestigt. Die Befestigung kann natürlich auch an einem mit dem Nabenbereich 10 verbundenen Bauteil erfolgen. Die Befestigungsstellen 25 (von denen in den Figuren nicht alle mit Bezugszeichen versehen sind) sind hier durch einfache Bohrungen in der Platte 18 gebildet, durch die z.B. Schrauben gesteckt sind, die am Nabenbereich 10 bzw. einem nabenfesten Bauteil verschraubt sind. Die Befestigung kann auf jede geeignete Form erfolgen, also beispielsweise auch über Klipse, Warmverstemmen oder Ultraschallschweißen. In diesem Beispiel sind jeweils zwei Befestigungsstellen 25 seitlich der Auslösebauteile 22 in jedem Hupensensor 20 vorgesehen. Über die Befestigungsstellen 25 ist auch das gesamte Hupenmodul 12 am Nabenbereich 10 befestigt.

Zusätzlich zu den auf der in den Figuren dargestellten Oberseite des Hupensensors 20 angeordneten Dehnungsmessstreifen 24 ist jeweils gegenüberliegend auf der Unterseite der Hupensensoren 20 ebenfalls wenigstens ein Dehnungsmessstreifen 24 vorgesehen (einer davon ist in Figur 4 angedeutet). Auf diese Weise ist es einfach möglich, eine durch ein Herunterdrücken des Gassackmoduls 15 ausgelöste Änderung des durch die Dehnungsmessstreifen 24 bestimmten elektronischen Werts von einer Änderung aufgrund beispielsweise thermischer Ausdehnung zu unterscheiden.

Die Auswerteelektronik 29 ist auch dazu in der Lage, beispielsweise aufgrund der kürzeren Zeitdauer, Störsignale herauszufiltern, wie sie etwa durch das Befahren einer schlechten Wegstrecke und damit verbundene Schwingungen des Gassackmoduls 15 durch die Trägheitswirkung entstehen.

Ein weiterer Vorteil ist, dass das Hupenmodul vor dem Einbau des Gassackmoduls in das Fahrzeuglenkrad getestet werden kann, da alle notwendigen Schaltkreise in das Hupenmodul selbst integriert sind.

Natürlich wäre es auch möglich, das Hupenmodul 12 am Gassackmodul 15 zu befestigen und die Kontaktpunkte 30 fahrzeugfest, z.B. im Nabenbereich 10, anzuordnen.

## Patentansprüche

1. Hupenmodul für ein Fahrzeuglenkrad, mit wenigstens einem elektronischen Hupensensor (20), der ein bei Aufbringung einer Hupenbetätigungskraft (F) auslenkbares Auslösebauteil (22) aufweist, **dadurch gekennzeichnet, dass** am Auslösebauteil (22) wenigstens ein Dehnungsmessstreifen (24) angeordnet ist, über dessen Auslenkung ein Signal erzeugbar ist.

2. Hupenmodul nach Anspruch 1, **dadurch gekennzeichnet, dass** das Auslösebauteil (22) einen bei Hupenbetätigung auslenkbaren balkenartigen Abschnitt aufweist, wobei der der balkenartige Abschnitt vorzugsweise ein frei auskragendes Ende hat.

3. Hupenmodul nach Anspruch 2, **dadurch gekennzeichnet, dass** zumindest ein Dehnungsmessstreifen (24) am Übergang des balkenartigen Abschnitts zum Rest des Auslösebauteils (22) sitzt.

4. Hupenmodul nach einem der vorhergehenden Ansprüche **dadurch gekennzeichnet, dass** das Auslösebauteil (22) einen Abschnitt einer Platte (18), insbesondere einer Leiterplatte, bildet.

5. Hupenmodul nach einem der vorhergehenden Ansprüche, **dadurch gekennzeichnet, dass** eine Auswerteelektronik (29) vorgesehen ist, die eine Signalverarbeitung vornimmt.

6. Hupenmodul nach Anspruch 5, **dadurch gekennzeichnet, dass** die Auswerteelektronik (29) so ausgebildet ist, dass sie zwischen Hupensignalen und kurzen Störimpulsen unterscheidet.

7. Hupenmodul nach einem der Ansprüche 5 oder 6, **dadurch gekennzeichnet, dass** die Auswerteelektronik (29) so programmiert ist, dass sie zu einem vorbestimmten Startzeitpunkt einen durch den Dehnungsmessstreifen (24) bestimmten elektronischen Wert als Nullwert festlegt.

8. Hupenmodul nach einem der Ansprüche 5 bis 7, **dadurch gekennzeichnet, dass** die Auswerteelektronik (29) auf einer Platte (18) angeordnet ist, die auch wenigstens einen der Hupensensoren (20) trägt.

9. Hupenmodul nach einem der vorhergehenden Ansprüche, **dadurch gekennzeichnet, dass** mehrere Hupensensoren (20) vorgesehen sind.

10. Hupenmodul nach einem der vorhergehenden Ansprüche, **dadurch gekennzeichnet, dass** in der Nähe des Dehnungsmessstreifens (24) Befestigungsstellen (25) zur Befestigung des Hupensensors (20) vorgesehen sind.

11. Hupenmodul nach einem der vorhergehenden Ansprüche, **dadurch gekennzeichnet, dass** mehrere parallel verlaufende Dehnungsmessstreifen (24) vorgesehen sind.

12. Hupenmodul nach einem der vorhergehenden Ansprüche, **dadurch gekennzeichnet, dass** der Dehnungsmessstreifen (24) durch Aufdrucken von Widerstandslack auf den Hupensensor (20) gebildet ist.

13. Hupenmodul nach einem der vorhergehenden Ansprüche, **dadurch gekennzeichnet, dass** jeweils wenigstens ein Dehnungsmessstreifen (24) auf gegenüberliegenden Seiten des Hupensensors (20) angeordnet ist.

14. Hupenmodul nach einem der vorhergehenden Ansprüche, **dadurch gekennzeichnet, dass** das Auslösebauteil (22) vorgespannt eingebaut ist.

15. Fahrzeuglenkrad mit einem Hupenmodul nach einem der vorhergehenden Ansprüche, **dadurch gekennzeichnet, dass** in einem Nabenbereich des Fahrzeuglenkrads ein Gassackmodul (15) beweglich angeordnet ist, an dem wenigstens ein Kontaktpunkt (30) vorgesehen ist, der in Kontakt mit einem Auslösebauteil (22) kommt, um das Auslösebauteil (22) auszulenken.

## Claims

1. A horn module for a vehicle steering wheel comprising at least one electronic horn sensor (20) having a trigger member (22) deflectable upon application of a horn actuating force (F), **characterized in that** at least one strain gauge (24) through deflection of which a signal can be generated is arranged at the trigger member (22).

2. The horn module according to claim 1, **characterized in that** the trigger member (22) includes a bar-shaped portion deflectable upon horn actuation, wherein the bar-shaped portion preferably has a freely projecting end.

3. The horn module according to claim 2, **characterized in that** at least one strain gauge (24) is located at the transition of the bar-shaped portion to the remaining trigger member (22).

4. The horn module according to any one of the preceding claims, **characterized in that** the trigger member (22) forms a portion of a board (18), especially of a printed circuit board.

5. The horn module according to any one of the preceding claims, **characterized in that** evaluation electronics (29) is provided for performing a signal processing.

6. The horn module according to claim 5, **characterized in that** the evaluation electronics (29) is configured so as to distinguish between horn signals and short interference pulses.

7. The horn module according to any one of the claims 5 or 6, **characterized in that** the evaluation electronics (29) is programmed so that at a predetermined starting time it sets an electronic value defined by the strain gauge (24) as zero value.

8. The horn module according to any one of the claims 5 to 7, **characterized in that** the evaluation electronics (29) is arranged on a board (18) also supporting at least one of the horn sensors (20).

9. The horn module according to any one of the preceding claims, **characterized in that** a plurality of horn sensors (20) are provided.

10. The horn module according to any one of the preceding claims, **characterized in that** in the vicinity of the strain gauge (24) mounting locations (25) for mounting the horn sensor (20) are provided.

11. The horn module according to any one of the preceding claims, **characterized in that** a plurality of strain gauges (24) extending in parallel are provided.

12. The horn module according to any one of the preceding claims, **characterized in that** the strain gauge (24) is formed by printing resistance coating onto the horn sensor (20).

13. The horn module according to any one of the preceding claims, **characterized in that** at least one strain gauge (24) is arranged on each of opposing sides of the horn sensor (20).

14. The horn module according to any one of the preceding claims, **characterized in that** the trigger member (22) is mounted in a biased state.

15. A vehicle steering wheel comprising a horn module according to any one of the preceding claims, **characterized in that** in a hub area of the vehicle steering wheel an airbag module (15) is movably arranged at which at least one contact point (30) is provided for contacting a trigger member (22) so as to deflect the trigger member (22).

## Revendications

1. Module avertisseur sonore pour un volant de direction de véhicule, avec au moins un capteur avertisseur sonore électronique (20) qui présente un élément de déclenchement (22) déformable par application d'une force d'actionnement (F) pour klaxonner, **caractérisé en ce que** sur l'élément de déclenchement (22) se trouve au moins une jauge de contrainte (24), et qui, par l'intermédiaire de sa déformation, génère un signal sonore

2. Module avertisseur sonore selon la revendication 1, **caractérisé en ce que**, l'élément de déclenchement (22) possède une partie en forme de poutre déformable par l'action de klaxonner, où la dite partie en forme de poutre a de préférence une extrémité libre saillante.

3. Module avertisseur sonore selon la revendication 2, **caractérisé en ce qu'**au moins une jauge de contrainte (24) se trouve à la transition entre la partie en forme de poutre et le reste de l'élément de déclenchement (22).

4. Module avertisseur sonore selon l'une des revendications précédentes, **caractérisé en ce que** l'élément de déclenchement (22) présente une partie de plaque (18), en particulier un circuit imprimé.

5. Module avertisseur sonore selon l'une des revendications précédentes, **caractérisé en ce qu'**un analyseur électronique (29) est prévu pour effectuer un traitement du signal.

6. Module avertisseur sonore selon la revendication 5, **caractérisé en ce que** l'analyseur électronique (29) est réalisé de sorte qu'il établit une distinction entre des signaux pour klaxonner et des impulsions d'interférence de courte durée.

7. Module avertisseur sonore selon l'une des revendications 5 ou 6, **caractérisé en ce que** l'analyseur électronique (29) est programmé de sorte que, pour un instant de début prédéterminé au travers de la jauge de contrainte (24) il définit une certaine valeur électronique comme une valeur nulle.

8. Module avertisseur sonore selon l'une des revendications 5 jusqu'à 7, **caractérisé en ce que** l'analyseur électronique (29) est disposé sur une plaque (18), qui supporte aussi au moins un des capteurs avertisseurs sonores (20).

9. Module avertisseur sonore selon l'une des revendications précédentes, **caractérisé en ce que**, plusieurs capteurs avertisseurs sonores (20) sont prévus.

10. Module avertisseur sonore selon l'une des revendications précédentes, **caractérisé en ce que** sont prévus au voisinage de la jauge de contrainte (24) des points de fixation (25) pour fixer les capteurs avertisseurs sonores (20).

11. Module avertisseur sonore selon l'une des revendications précédentes, **caractérisé en ce que** plusieurs jauges de contrainte (24) sont disposées en parallèle.

12. Module avertisseur sonore selon l'une des revendications précédentes, **caractérisé en ce que** les jauges de contrainte (24) sont imprimées en peinture résistive sur les capteurs avertisseurs sonores (20).

13. Module avertisseur sonore selon l'une des revendications précédentes, **caractérisé en ce que** dans chaque cas au moins une jauge de contrainte (24) est disposée du côté opposé au capteur avertisseur sonore (20).

14. Module avertisseur sonore selon l'une des revendications précédentes, **caractérisé en ce que** l'élément de déclenchement (22) est monté précontraint.

15. Volant de direction de véhicule équipé d'un module avertisseur sonore selon l'une des revendication précédentes, **caractérisé en ce que**, dans la zone du moyeu du volant de direction est disposé un module airbag (15) mobile, qui présente au moins un point de contact (30), qui vient en contact avec l'élément de déclenchement (22) pour déformer le dit élément de déclenchement (22).
